# FASCICULE DE BREVET EUROPEEN

(11) **EP 3 726 038 B1**
(45) Date de publication et mention de la délivrance du brevet: **12.07.2023**
(21) Numéro de dépôt: 20170062.2
(22) Date de dépôt: 17.04.2020
(51) Int. Cl.: F02K 1/72, B29C 70/08, B29C 70/42

(54) **PROCÉDÉ DE FABRICATION D'UNE GRILLE POUR UN INVERSEUR DE POUSSÉE**
HERSTELLUNGSVERFAHREN EINES GITTERS FÜR EIN SCHUBUMKEHRSYSTEM
METHOD FOR MANUFACTURING A GRID FOR A THRUST REVERSER

(30) Priorité: 17.04.2019 FR 1904127
(43) Date de publication de la demande: 21.10.2020
(73) Titulaire: HUTCHINSON, 75008 Paris (FR)
(72) Inventeur: GUILLAUME, Basile, 45200 MONTARGIS (FR); RIETSCH, Jean-Christophe, 91100 CORBEIL ESSONNES (FR); GAW, Kevin O'Brien, 77780 BOURRON-MARLOTTE (FR); PATILLAUT, Thomas, 45220 MELLEROY (FR)
(74) Mandataire: Gevers & Orès

(56) Documents cités:
- EP-A1- 3 406 887
- EP-A2- 1 118 763
- EP-A2- 2 944 452
- FR-A1- 3 048 025

## Description

### Domaine technique de l'invention

La présente invention se rapporte au domaine des inverseurs de poussée, notamment utilisés sur les moteurs à réaction d'aéronefs.

Un inverseur de poussée est employé lors de l'atterrissage d'un aéronef muni de moteurs à réaction pour décélérer l'aéronef. Plus précisément, un inverseur de poussée permet de rediriger le flux d'air entrant dans le moteur à réaction dans une direction sensiblement opposée à la direction d'avancement de l'aéronef lors de l'atterrissage et ainsi d'aider à la décélération de l'avion.

### Arrière-plan technique

Il existe différents types d'inverseurs de poussée.

L'inverseur de poussée considéré comme étant le plus performant est nommé « cascade ». Une « cascade est formé d'une pluralité de grilles, agencées les unes à côté des autres sur la périphérie de la nacelle du moteur à réaction, chaque grille étant attachée sur la nacelle.

Un inverseur de poussée de ce type est généralement installé à mi-longueur de la nacelle du moteur à réaction.

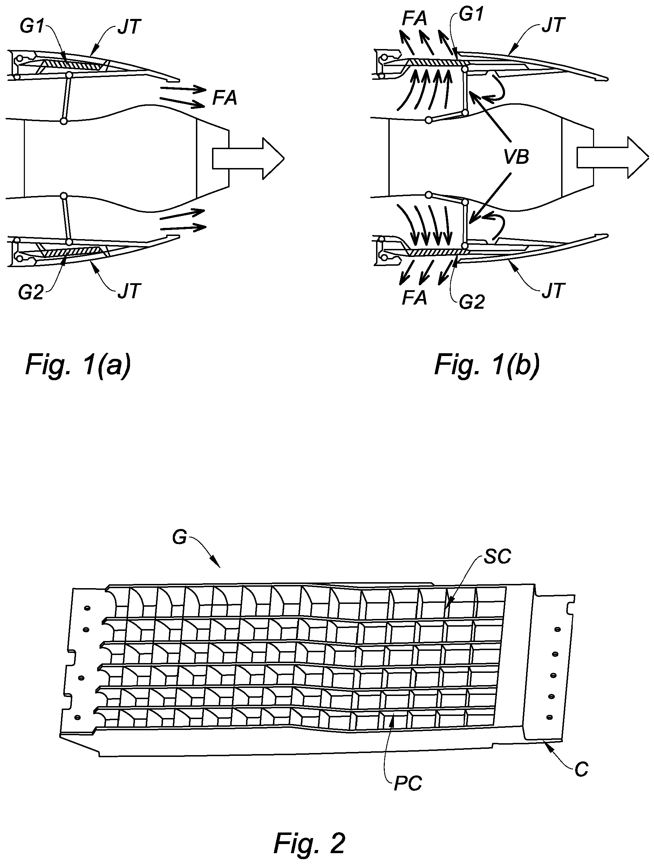

La figure 1 représente une vue en coupe d'un moteur à réaction d'un aéronef d'une part en vol sur la figure 1(a) et d'autre part au moment de l'atterrissage sur la figure 1(b).

La comparaison des deux figures permet de voir l'effet de l'inverseur de poussée de type « cascade ».

En effet, à l'atterrissage, une jupe translatable JT de la nacelle est déplacée en même temps qu'un volet de blocage VB pour que le flux d'air FA soit redirigé vers les grilles G1, G2 de l'inverseur de poussée.

La figure 2 représente, selon une vue en perspective, une grille G typique d'un inverseur de poussée de type « cascade ».

Une grille G d'un inverseur de poussée de type « cascade » comporte des premiers composants PC, nommés longerons ou « strongbacks » selon la terminologie anglo-saxonne, qui s'étendent, une fois l'inverseur de poussée installé sur un moteur réaction, selon la direction longitudinale du moteur, des seconds composants SC, nommés aubes ou « vanes » selon la terminologie anglo-saxonne, qui s'étendent transversalement par rapport aux premiers composants et donc selon la périphérie du moteur à réaction, ainsi que généralement, comme c'est le cas sur la figure 2, un cadre C pour ces premiers composants PC et seconds composants SC.

Actuellement, ces grilles sont réalisées en matériau composite, à savoir avec des fibres pré-imprégnées par une résine.

L'ensemble des composants participe à la tenue mécanique à la redirection du flux d'air dans la direction opposée d'avancement de l'aéronef lors d'un atterrissage.

La fabrication d'une grille d'un inverseur de poussée de type « cascade » en matériau composite est particulièrement complexe.

En effet, cela nécessite beaucoup d'étapes, notamment manuelles, certaines étapes pouvant en outre impliquer un outillage coûteux.

Généralement, les techniques actuelles consistent à :
a) fabriquer les premiers composants ou longerons d'un côté,
b) fabriquer les seconds composants ou aubes d'un autre côté, puis
c) à assembler les seconds composants aux premiers composants. C'est par exemple ce qui est proposé dans le document US 9 587 582 B1 (D1).

Dans ce document, les premiers composants peuvent être fabriqués individuellement ou d'une seule pièce par différentes techniques telles que le moulage par injection basse pression de résine (plus connu sous l'acronyme RTM pour « Resin Transfer Molding » selon la terminologie anglo-saxonne), la pultrusion ou par moulage par compression (« compression molding » selon la terminologie anglo-saxonne).

Dans ce document également, on fabrique les seconds composants soit à partir d'un bloc qui est ensuite coupé en différents composants individuels, soit en formant individuellement chacun des seconds composants. Quelle que soit la voie employée, le bloc ou chaque second composant fabriqué individuellement peut être obtenu par RTM ou moulage par compression. Toujours dans ce document, l'assemblage des seconds composants aux premiers composants s'effectue ensuite en glissant chacun des seconds composants dans des fentes de réception prévues dans les premiers composants. Il convient ensuite d'assurer le maintien de chacun des seconds composants sur les premiers composants à l'aide d'un adhésif structurel. Une fois les étapes a), b) et c) effectuée, il convient en outre de former définitivement le cadre de la grille dans une étape ultérieure.

On comprend que ce procédé est long à mettre en oeuvre, notamment du fait que chacun des seconds composants (aubes) doit être inséré ou glissé entre deux premiers composants (longerons).

Le document FR 3 048 025 A1 (D2) propose aussi un procédé conforme aux étapes a), b) et c) ci-dessus.

La particularité de ce procédé réside dans la fabrication des seconds composants. En effet, pour réaliser chacun des seconds composants, on part d'une préforme en matériau composite pré-imprégnée par une résine puis on effectue une opération d'estampage à la forme souhaitée.

Dans un mode de réalisation, chacun des seconds composants est ensuite installé sur les premiers composants et une opération de soudage de ceux-ci est finalement réalisée.

A l'issue de ces étapes a), b) et c), il convient alors de fournir un cadre sur lesquels les premiers et seconds composants peuvent être fixés.

Le temps de fabrication peut alors être rapproché de celui du document D1. Le document EP 2 944 452 (D3) propose également un procédé selon les étapes a), b) et c) mentionnées précédemment.

Toutefois, ici les seconds composants ne se présentent pas comme des composants individuels qui sont ensuite assemblés aux premiers composants, mais comme des composants (aubes) liés ensemble par l'intermédiaire d'un cadre pour former une structure en forme d'échelle ou d'étagère (figure 7 ou figure 8 de ce document). La structure en forme d'échelle ou d'étagère est ensuite assemblée à un assemblage comportant des premiers composants (longerons) avec un cadre (figure 6 de ce document).

L'assemblage des premiers composants avec son cadre (figure 6 de ce document) peut être obtenu par moulage par compression.

De manière similaire, l'assemblage des seconds composants avec son cadre pour former la structure en forme d'échelle ou d'étagère(figure 7 de ce document) peut être réalisée par moulage par compression.

Ceci est avantageux par rapport à la solution proposée dans le document D1 ou le document D2, sur le plan du nombre d'opération à effectuer, notamment manuellement.

De plus, le cadre de la grille est finalement formé en même temps que les premiers et seconds composants, contrairement à ce qui est proposé dans les documents D1 et D2.

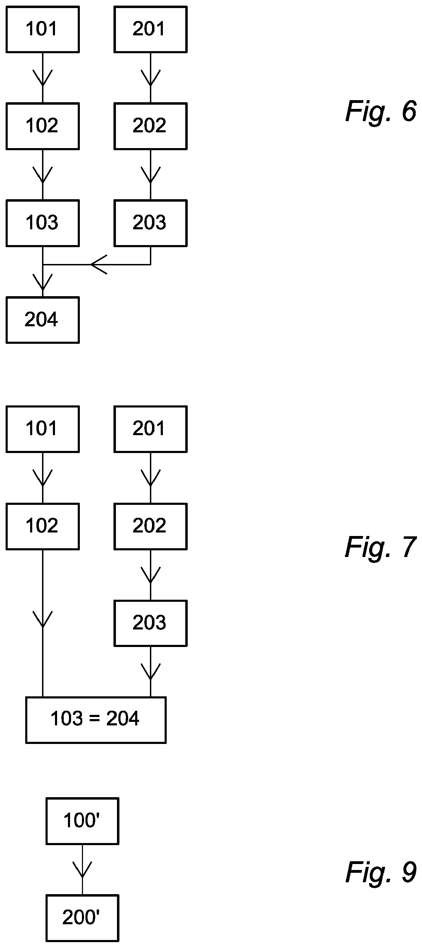

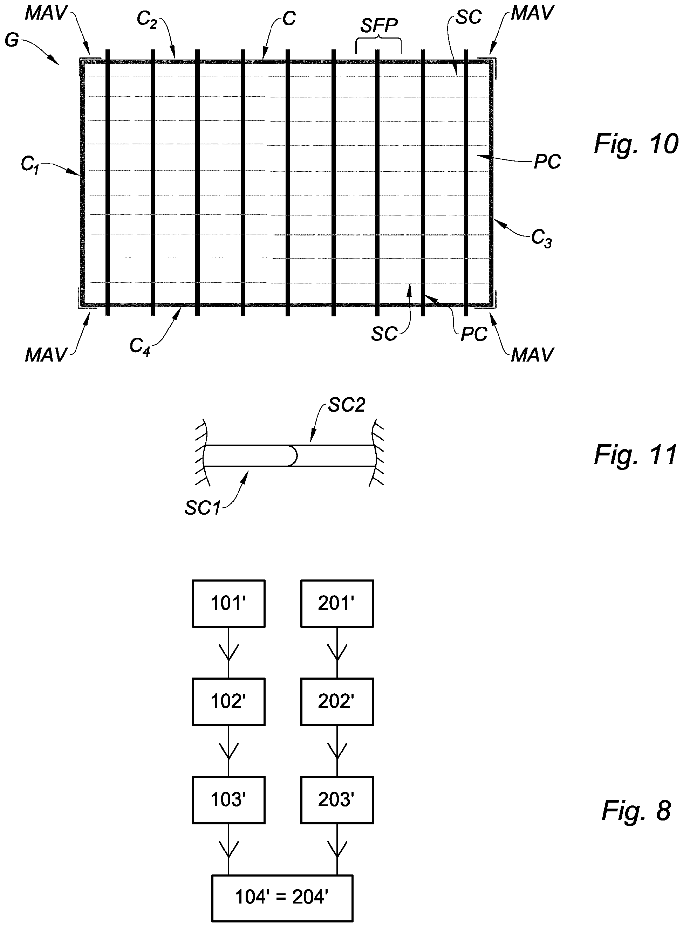

Cependant, afin d'assurer la co-consolidation des deux assemblages (assemblage de la figure 7 ou de la figure 8 d'une part à l'assemblage de la figure 6 d'autre part), un outillage particulier, plus complexe, basé sur un mandrin est employé. Ce mandrin est par ailleurs soluble, donc non réutilisable, ce qui augmente les coûts.

Un objectif de l'invention est de proposer un procédé de fabrication d'une grille pour un inverseur de poussée de type « cascade » qui est peu coûteux en temps et nécessitant un outillage relativement simple.

Ceci permettrait en effet de diminuer les coûts de fabrication d'une telle grille.

### Résumé de l'invention

Afin de résoudre l'objectif précité, l'invention propose un procédé de fabrication d'une grille pour un inverseur de poussée, de type cascade, d'un moteur à réaction, ledit procédé comportant, conformément à la revendication 1, les étapes suivantes :
a) fabriquer un premier composant comportant des fibres continues ou longues pré-imprégnées par une résine thermoplastique ou thermodurcissable, les fibres longues ayant une longueur comprise entre 1mm et 70 mm ;
b) fabriquer, subséquemment ou concomitamment à l'étape a), une série de seconds composants comportant chacun des fibres discontinues pré-imprégnées par une résine thermoplastique ou thermodurcissable, l'étape b) étant réalisée de sorte que les seconds composants soient d'une part agencés transversalement par rapport à une direction longitudinale du premier composant sur au moins un côté du premier composant et d'autre part, espacés les uns des autres selon cette direction longitudinale, de sorte à former une structure en forme de peigne dans laquelle les seconds composants sont consolidés au premier composant.
   Le procédé selon l'invention pourra également comprendre l'une au moins des caractéristiques suivantes, prises seules ou en combinaison, conformément aux revendications dépendantes 2 à 17:
   - un premier composant fabriqué au cours de l'étape a) comprend une série d'encoches, chaque encoche recevant un second composant ;
   - l'étape b) consiste en outre à solidariser des seconds composants au premier composant associé sur un deuxième côté du premier composant, le deuxième côté étant opposé au premier côté ;
   - le procédé comporte en outre les étapes suivantes :
c) répéter les étapes a) et b) au moins une fois, afin d'obtenir au moins une autre structure en forme de peigne dans laquelle les seconds composants sont consolidés au premier composant ;
d) agencer lesdites structures en forme de peigne obtenues précédemment sur un cadre configuré pour être attaché audit moteur à réaction ; et
e) solidariser les structures en forme de peigne audit cadre.
   - deux seconds composants, avantageusement à l'issue de l'étape c), de deux structures en peigne différentes, sont solidarisés l'un à l'autre, par exemple par soudage et/ou par collage et/ou par complémentarité de forme ;
   - le cadre comprend des encoches ou, selon le cas des ergots, pour recevoir chaque structure en forme de peigne ;
   - quatre côtés qui sont fixés deux à deux par des moyens d'attache amovibles ;
   - le cadre comporte des fibres continues ou des fibres longues pré-imprégnées par une résine thermoplastique ou thermodurcissable ;
   - l'étape a) comporte les sous-étapes suivantes :
      a₁) fournir au moins un feuillet réalisé avec des fibres continues pré-imprégnées par une résine thermoplastique ou thermodurcissable ;
      a₂) placer ledit au moins un feuillet dans un moule ;
      a₃) réaliser un moulage par compression dudit au moins un feuillet dans le moule pour obtenir le premier composant.
   - l'étape b) comporte les sous-étapes suivantes :
      b₁) fournir au moins un deuxième feuillet réalisé avec des fibres continues pré-imprégnées par une résine thermoplastique ou thermodurcissable;
      b₂) découper le deuxième feuillet de sorte à créer des copeaux formés de fibres discontinues pré-imprégnées par une résine thermoplastique ou
      thermodurcissable ;
      b₃) placer lesdits copeaux dans un moule; et
      b₄) réaliser un moulage par compression desdits copeaux dans le moule pour obtenir les seconds composants.
   - les sous-étapes a₂) et b₃) s'effectuent dans le même moule et les sous-étapes a₃) et b₄) s'effectuent concomitamment si bien que les étapes a) et b) s'effectuent concomitamment ;
   - la sous-étape b₃) s'effectue dans un moule en présence du premier composant obtenu à l'issue de la sous-étape a₃) si bien que les étapes a) et b) s'effectuent subséquemment ;
   - l'étape a) comporte les sous-étapes suivantes :
      a'₁) fournir un feuillet réalisé avec des fibres continues pré-imprégnées par une résine thermoplastique ou thermodurcissable ;
      a'₂) découper le feuillet de sorte à créer des copeaux formés de fibres longues pré-imprégnées par une résine thermoplastique ou thermodurcissable ;
      a'₃) placer lesdits copeaux dans un moule; et
      a'₄) réaliser un moulage par compression desdits copeaux dans le moule pour obtenir le premier composant.
   - l'étape b) comporte les sous-étapes suivantes :
      b'₁) fournir au moins un deuxième feuillet réalisé avec des fibres continues pré-imprégnées par une résine thermoplastique ou thermodurcissable;
      b'₂) découper le deuxième feuillet de sorte à créer des copeaux formés de fibres longues pré-imprégnées par une résine thermoplastique ou thermodurcissable ;
      b'₃) placer lesdits copeaux dans un moule; et
      b'₄) réaliser un moulage par compression desdits copeaux dans le moule pour obtenir les seconds composants.
   - les sous-étapes a'₃) et b'₃) s'effectuent dans le même moule et les sous-étapes a'₄) et b'₄) s'effectuent concomitamment si bien que les étapes a) et b) s'effectuent concomitamment ;
   - l'étape a) s'effectue par pultrusion et dans lequel l'étape b) s'effectue subséquemment par surmoulage par injection d'un premier composant ;
   - l'étape b) de surmoulage par injection s'effectue avec des fibres courtes, à savoir des fibres discontinues présentant une longueur non nulle et inférieure à 100 microns, pré-imprégnées par une résine thermoplastique ou thermodurcissable.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1a-1b] les figures 1a-1b représentent une vue en coupe d'un moteur à réaction d'un aéronef d'une part en vol et d'autre part au moment de l'atterrissage,
[Fig.2] la figure 2 représente, selon une vue en perspective, une grille G typique d'un inverseur de poussée de type « cascade »
[Fig.3] la figure 3 représente, selon une vue en perspective, une structure en forme de peigne obtenue avec le procédé selon l'invention;
[Fig.4] la figure 4 représente, une vue de côté de d'une structure en forme de peigne obtenue avec le procédé selon l'invention,
[Fig.5] la figure 5 représente, selon une vue de dessus schématique, une autre structure en forme de peigne obtenue avec le procédé selon l'invention ;
[Fig.6] la figure 6 représente différentes étapes d'un premier mode de mise en oeuvre du procédé selon l'invention, selon une première variante ;
[Fig.7] la figure 7 représente différentes étapes de ce premier mode de mise en oeuvre du procédé selon l'invention, selon une deuxième variante ;
[Fig.8] la figure 8 représente différentes étapes de ce premier mode de mise en oeuvre du procédé selon l'invention, selon une troisième variante
[Fig.9] la figure 9 représente différentes étapes d'un deuxième mode de mise en oeuvre du procédé selon l'invention
[Fig.10] la figure 10 représente schématiquement et selon une vue de dessus une grille munie d'un cadre et obtenue selon un procédé conforme à l'invention ;
[Fig.11] la figure 11 représente une façon de solidariser deux structures en peigne différentes d'une même grille ;
[Fig.12] la figure 12 représente schématiquement et selon une vue en perspective un ensemble de structures en forme de peigne avant leur assemblage à un cadre particulier.

### Description détaillée de l'invention

Dans la description qui suit, on entendra par fibres « longues », des fibres dont la longueur est comprise entre 1mm et 70mm, avantageusement entre 1mm et 50mm, ou plus avantageusement entre 1mm et 30mm.

De manière analogue, dans la description qui suit, on entendra par fibres « courtes », des fibres dont la longueur est comprise 1 micron et 1mm, cette dernière valeur (1mm) étant exclue, avantageusement entre 1 micron et 500 microns, encore plus avantageusement entre 1 microns et 300 microns, voire entre 1 micron et 100 microns.

Dans la description qui suit, une fibre discontinue peut donc être soit longue ou courte.

Par ailleurs, toute fibre qui n'est pas discontinue est assimilée à une fibre continue.

Enfin, le terme « feuillet » pourra désigner indifféremment une nappe, notamment une nappe de fibres unidirectionnelles, ou un tissu.

L'invention concerne, conformément à la revendication 1, un procédé de fabrication d'une grille pour un inverseur de poussée, de type cascade, d'un moteur à réaction, ledit procédé comportant les étapes suivantes :
a) fabriquer un premier composant comportant des fibres continues ou longues pré-imprégnées par une résine thermoplastique ou thermodurcissable, les fibres longues ayant une longueur comprise entre 1 mm et 70 mm;
b) fabriquer, subséquemment ou concomitamment à l'étape a), une série de seconds composants comportant chacun des fibres discontinues pré-imprégnées par une résine thermoplastique ou thermodurcissable, l'étape b) étant réalisée de sorte que les seconds composants soient d'une part agencés transversalement par rapport à une direction longitudinale du premier composant sur au moins un côté du premier composant et d'autre part, espacés les uns des autres selon cette direction longitudinale, de sorte à former une structure en forme de peigne dans laquelle les seconds composants sont consolidés au premier composant.

Par ce biais, la consolidation des seconds composants (aubes) aux premiers composants (longerons) ne nécessite pas d'étape particulière, contrairement aux solutions notamment proposées dans les documents de l'état de la technique décrits précédemment.

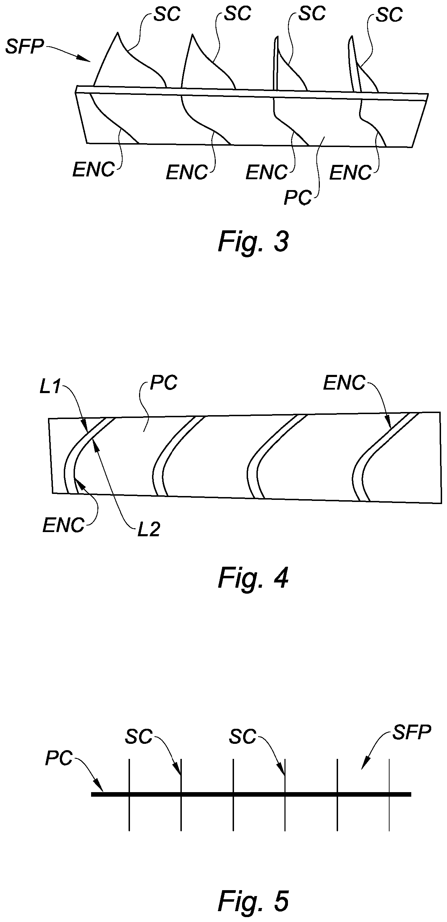

La figure 3 représente une structure en forme de peigne SFP obtenue à l'issue de l'étape b).

En outre, un premier composant fabriqué au cours de l'étape a) peut comprendre une série d'encoches ENC, chaque encoche recevant un second composant.

Ces encoches ENC sont par exemple visibles sur la figure 3 et sont en l'occurrence formées dans la masse du premier composant, autrement dit en réalisant une fente dans l'épaisseur du premier composant.

De telles encoches sont aussi visibles sur la figure 4. Sur cette figure 4, les encoches sont cependant obtenues en réalisant deux lèvres L1, L2 en surépaisseur par rapport au premier composant, une fente étant ainsi obtenue entre les deux lèvres. Réaliser une encoche de cette façon permet de conserver l'épaisseur du premier composant donc sans risque d'altérer la performance mécanique d'un premier composant. De plus, réaliser une encoche de cette façon permet de rigidifier la jonction entre un second composant et un premier composant, si bien que la tenue mécanique entre ces composants est améliorée. Il convient par ailleurs de relever que réaliser l'encoche avec de telle lèvres n'a pas d'impact sensible sur le flux d'air traversant la cascade.

L'étape b) peut en outre consister à solidariser des seconds composants au premier composant associé sur un deuxième côté du premier composant, le deuxième côté étant opposé au premier côté. Dans ce cas, les seconds composants (aubes) s'étendent de part et d'autre d'un premier composant (longeron), comme cela est représenté selon une vue de dessus schématique sur la figure 5.

On peut pour l'essentiel envisager deux modes de réalisation pour mettre en oeuvre ce procédé.

Dans un premier mode de réalisation, on met en oeuvre un moulage par compression, tant pour fabriquer les premiers composants (étape a)) que pour fabriquer les seconds composants (étape b)).

Plus précisément, l'étape a) comporte alors les sous-étapes suivantes :
a₁) fournir 101 au moins un feuillet réalisé avec des fibres continues pré-imprégnées par une résine thermoplastique ou thermodurcissable ;
a₂) placer 102 ledit au moins un feuillet dans un moule ;
a₃) réaliser 103 un moulage par compression dudit au moins un feuillet dans le moule pour obtenir le premier composant.

On notera qu'il est avantageux d'employer des fibres continues pour former un premier composant, lequel est destiné à former un longeron de la grille, pour des questions de résistance mécanique.

Plus précisément également, l'étape b) comporte alors les sous-étapes suivantes :
b₁) fournir 201 au moins un deuxième feuillet réalisé avec des fibres continues pré-imprégnées par une résine thermoplastique ou thermodurcissable;
b₂) découper 202 le deuxième feuillet de sorte à créer des copeaux formés de fibres discontinues pré-imprégnées par une résine thermoplastique ou thermodurcissable ;
b₃) placer 203 lesdits copeaux dans un moule; et b₄) réaliser 204 un moulage par compression desdits copeaux dans le moule pour réaliser les seconds composants.

Lorsque la sous-étape b₃), 203, s'effectue dans un moule en présence du premier composant obtenu à l'issue de la sous-étape a₃), alors la sous-étape b₃) s'effectue subséquemment à la sous-étape a₃), 103. De fait, les étapes a) et b) s'effectuent subséquemment. Il y a alors deux opérations de moulage par compression, l'une pour le premier composant et l'autre pour les seconds composants qui va permettre dans le même temps la consolidation au premier composant. Il n'en reste donc pas moins que l'opération de moulage par compression des seconds composants, s'effectuant en présence du premier composant, permet non seulement de former les seconds composants, mais dans le même temps d'assurer la consolidation des seconds composants SC au premier composant PC.

Cette option est représentée sur la figure 6.

L'intérêt de réaliser les étapes a) et b) comme indiqué précédemment réside dans le fait que le premier moulage permet de s'assurer de l'alignement des fibres continues du premier composant, avant que le moulage des seconds composants ne soit réalisé.

Au contraire, lorsque les sous-étapes a₂), 102, et b₃), 203, s'effectuent dans le même moule, on met en oeuvre les sous-étapes a₃), 103, et b₄), 204, concomitamment. De fait, les étapes a) et b) s'effectuent concomitamment. Ainsi, on forme la structure en forme de peigne avec un premier composant et une série de seconds composants en une seule opération de moulage par compression, au cours de laquelle de surcroît les seconds composants SC sont solidarisés au premier composant. Cette variante est intéressante car elle permet de gagner un peu plus de temps de fabrication, et donc en coût de fabrication, en ne prévoyant finalement qu'une seule étape de moulage par compression.

Cette autre option est représentée sur la figure 7.

Une autre variante est envisageable pour les étapes a) et b).

En effet, on a décrit ci-dessus le cas où les fibres du premier composant sont des fibres continues et où les fibres des seconds composants sont discontinues, i.e. courtes ou longues.

Un autre cas intéressant est cependant de mettre en oeuvre plus particulièrement des fibres longues pour le premier composant et des fibres également longues pour les seconds composants.

En effet, des fibres longues pour le premier composant, mais aussi pour les seconds composants permettent de maintenir des propriétés mécaniques intéressantes.

Ceci peut s'effectuer avec deux moulages, l'un pour le premier composant et l'autre pur les seconds composants, mais ceci est avantageux dans le cas où à la fois le premier composant et les seconds composants sont moulé en même temps.

On pourra se référer à la figure 8.

Ainsi, l'étape a) peut comporter les sous-étapes suivantes :
a'₁) fournir 101' un feuillet réalisé avec des fibres continues pré-imprégnées par une résine thermoplastique ou thermodurcissable ;
a'₂) découper 102' le feuillet de sorte à créer des copeaux formés de fibres longues pré-imprégnées par une résine thermoplastique ou thermodurcissable ;
a'₃) placer 103' lesdits copeaux dans un moule; et
a'₄) réaliser 104' un moulage par compression desdits copeaux dans le moule pour obtenir le premier composant.

L'étape b) peut comporter les sous-étapes suivantes :
b'₁) fournir 201' au moins un deuxième feuillet réalisé avec des fibres continues pré-imprégnées par une résine thermoplastique ou thermodurcissable;
b'₂) découper 202' le deuxième feuillet de sorte à créer des copeaux formés de fibres longues pré-imprégnées par une résine thermoplastique ou thermodurcissable ;
b'₃) placer 203' lesdits copeaux dans un moule; et
b'₄) réaliser 204' un moulage par compression desdits copeaux dans le moule pour obtenir les seconds composants.

Avantageusement, et comme d'ailleurs représenté sur la figure 8, les sous-étapes a'₃), 102' et b'₃), 103' s'effectuent dans le même moule et les sous-étapes a'₄), 103' et b'₄), 204' s'effectuent concomitamment si bien que les étapes a) et b) s'effectuent concomitamment. Cela permet de limiter le nombre d'outillages et de gagner du temps.

Dans un deuxième mode de réalisation, l'étape a), 100', s'effectue par pultrusion et l'étape b), 200', s'effectue subséquemment par surmoulage par injection d'un premier composant.

On pourra se référer à la figure 8.

L'étape a) de pultrusion s'effectue alors avantageusement avec des fibres continues ou longues pré-imprégnées par une résine thermoplastique ou thermodurcissable.

L'étape b) de surmoulage par injection s'effectue alors avantageusement avec des fibres courtes pré-imprégnées par une résine thermoplastique ou thermodurcissable. En effet, le surmoulage par injection est plus aisé avec des fibres courtes.

Quel que soit le mode de réalisation mis en oeuvre, les fibres sont avantageusement choisies parmi des fibres de carbone, des fibres de verre, des fibres d'aramide ou d'un mélange de celles-ci

Par ailleurs, on peut choisir une résine thermoplastique choisie parmi les polyamides (PA), les polyphtalamides (PPA), les polysulfure de phénylène(PPS), les polyétherimides (PEI), les polyétheréthercétone (PEEK) ou les polyéthercétonecétone (PEKK).

Par ailleurs également, on peut choisir une résine thermodurcissable choisie parmi l'epoxy ou le vinylester.

En particulier, on pourra prévoir des fibres de carbone avec une résine thermodurcissable de type époxy, ou des fibres de carbone avec une résine thermoplastique de type polyétherimide (PEI).

Quel que soit le mode de réalisation mis en oeuvre, on pourra en outre prévoir les étapes suivantes pour réaliser une grille:
c) répéter les étapes a) et b) au moins une fois, afin d'obtenir au moins une autre structure en forme de peigne dans laquelle les seconds composants sont consolidés au premier composant ;
d) agencer lesdites structures en forme de peigne obtenues précédemment sur un cadre configuré pour être attaché audit moteur à réaction ; et
e) solidariser les structures en forme de peigne audit cadre.

La figure 10 représente, de façon schématique, une vue de dessus de la grille G obtenue à l'issue de l'étape e). Sur cette figure 10, on observe plusieurs structures en forme de peigne agencées les unes à côté des autres, chaque structure en forme de peigne comportant un premier composant PC et une série de seconds composants SC, ainsi qu'un cadre C. On peut en outre prévoir une étape additionnelle, avantageusement mise en oeuvre après l'étape c) dans laquelle deux seconds composants (aubes), de deux structures en peigne différentes, sont solidarisés l'un à l'autre, par exemple par soudage et/ou par collage et/ou par complémentarité de forme.

C'est ce qui est représenté sur la figure 11. Sur cette figure 11 en effet, on peut observer un second composant SC1 d'une première structure en peigne et un second composant SC2 d'une second structure en peigne. Les seconds composants SC1 et SC2 présentent ici à la fois une complémentarité de forme et un soudage.

Ceci permet de rigidifier la structure et en conséquence d'améliorer ses propriétés mécaniques. Cela permet également d'assurer une continuité de la grille sans perturber, à l'usage, le flux d'air qui est redirigé vers l'avant de l'aéronef lors d'un atterrissage.

Pour faciliter la mise en oeuvre de l'étape e), le cadre C peut comprendre des encoches pour recevoir chaque structure en forme de peigne. De telles encoches sont alors similaires à celles représentées sur la figure 3 ou 4 sur un premier composant.

Le cadre peut être réalisé de différentes façons.

Le cadre peut ainsi comprendre quatre côtés C1, C2, C3, C4 qui sont avantageusement fixés deux à deux par des moyens d'attache amovibles MAV, schématiquement représentés sur la figure 10. Les moyens d'attache peuvent être des rivets (solution non amovible) ou des coins fixés par un système de boulons (solution amovible). Réaliser le cadre après avoir réalisé les différentes structures en forme de peigne permet un ajustement plus aisé de la grille.

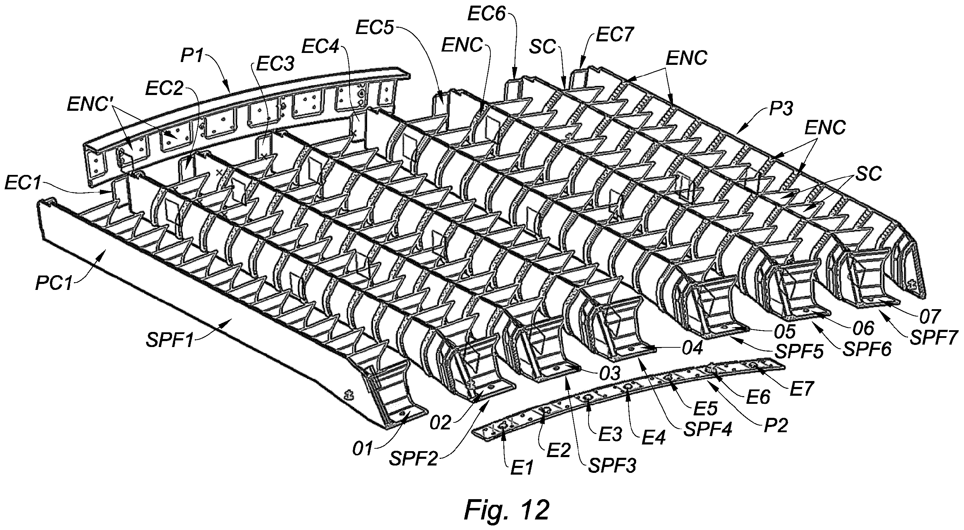

Le cadre peut aussi être réalisé comme présenté sur la figure 12.

Sur cette figure 12, on note la présence d'une pluralité de structures en forme de peigne, SPF1 à SPF7. Chacune d'entre elle est formée conformément aux étapes a) et b) du procédé selon l'invention.

L'ensemble visible sur la figure 12 est donc celui que l'on peut observer au cours de l'étape d) d'assemblage avant l'étape e) de consolidation.

On note aussi la présence d'encoches ENC sur les structures en forme de peigne SPF2 à SPF7.

Le premier composant PC1 de la structure en forme de peigne SPF1 forme un élément du cadre.

Le reste du cadre comporte trois autres pièces P1, P2, P3.

La pièce P3 est en fait un premier composant, sans ses seconds composants, qui comporte des encoches ENC aptes à recevoir les seconds composants SC de la structure en forme de peigne SPF7. Il est avantageusement placé du côté opposé au premier composant PC1.

La pièce P2 est assimilable à une lamelle munie d'ergots E1 à E7 qui viennent s'insérer dans des orifices correspondants O1 à O7 des différentes structures en forme de peigne. Cette pièce P2 permet de lier toutes les structures en forme de peigne. La forme en lamelle est par ailleurs simple à réaliser, par exemple en fibres continues pour assurer une bonne tenue mécanique.

Enfin, la pièce P1 est une pièce qui présente également une série d'encoches ENC' visant à coopérer avec des éléments correspondants EC1 à EC7 prévus aux extrémités respectives de chacun des premiers composants des différentes structures en forme de peigne. Cette forme correspondante permet de placer la pièce P1 de manière précise par rapport aux différentes structures en forme de peigne. Cela permet également de rigidifier la jonction par des appuis mécaniques.

Le cadre est avantageusement réalisé en matériau composite. En particulier, il comporte avantageusement des fibres continues ou des fibres longues pré-imprégnées par une résine thermoplastique ou thermodurcissable.

Nous allons maintenant décrire un exemple de réalisation.

Dans cet exemple, les étapes a) et b) du procédé sont réalisées concomitamment.

On part d'un feuillet, en l'occurrence une nappe, de fibres de carbone unidirectionnelles (UD), lesquelles sont continues. Cette nappe est pré-imprégnée par une résine thermoplastique de type polyétherimide (PEI). Cette nappe est découpée en copeaux pour former des fibres longues, en l'occurrence de 12,7mm*12,7mm.

Les copeaux sont introduits dans un moule présentant une forme complémentaire à celle d'un peigne, donc pour former à la fois un longeron (premier composant) et un ensemble d'aubes (deuxièmes composants).

Le moule est refermé pour assurer une mise sous pression de 30 bars environ et chauffé à une température supérieure à la température de fusion du polyétherimide employé comme résine.

Il s'agit donc d'un moulage par compression.

Ensuite, et ce de manière tout à fait classique, le moule est refroidit jusqu'à la température de transition vitreuse du polyétherimide employé comme résine, pour assurer le démoulage de la pièce en forme de peigne.

Cette opération peut être répétée plusieurs fois conformément à l'étape c), pour obtenir toutes les pièces utiles à la formation complète de la grille.

Puis, on met en oeuvre l'étape d) d'agencement par rapport à un cadre. L'étape e) d'assemblage final est alors réalisée par soudage à l'aide d'un outil dédié, en soi classique.

Quel que soit le mode de réalisation considéré, il convient enfin de noter que le procédé selon l'invention permet de fabriquer des pièces comportant de nombreuses contre-dépouilles.

## Revendications

1. Procédé de fabrication d'une grille pour un inverseur de poussée, de type cascade, d'un moteur à réaction, ledit procédé comportant les étapes suivantes :
a) fabriquer (101, 102, 103 ; 101', 102', 103', 104' ; 100') un premier composant (PC) comportant des fibres continues ou longues pré-imprégnées par une résine thermoplastique ou thermodurcissable, les fibres longues ayant une longueur comprise entre 1 mm et 70 mm ;
b) fabriquer (201, 202, 203, 204 ; 201', 202', 203', 204' ; 200'), subséquemment ou concomitamment à l'étape a), une série de seconds composants (SC) comportant chacun des fibres discontinues pré-imprégnées par une résine thermoplastique ou thermodurcissable, l'étape b) étant réalisée de sorte que les seconds composants (SC) soient d'une part agencés transversalement par rapport à une direction longitudinale du premier composant (PC) sur au moins un côté du premier composant et d'autre part, espacés les uns des autres selon cette direction longitudinale, de sorte à former une structure en forme de peigne (SFP) dans laquelle les seconds composants (SC) sont consolidés au premier composant (PC).

2. Procédé selon la revendication 1, dans lequel un premier composant fabriqué au cours de l'étape a) comprend une série d'encoches (ENC), chaque encoche recevant un second composant.

3. Procédé selon l'une des revendications précédentes, dans lequel l'étape b) consiste en outre à solidariser des seconds composants (SC) au premier composant (PC) associé sur un deuxième côté du premier composant, le deuxième côté étant opposé au premier côté.

4. Procédé selon l'une des revendications précédentes, comportant en outre les étapes suivantes :
c) répéter les étapes a) et b) au moins une fois, afin d'obtenir au moins une autre structure en forme de peigne (SFP) dans laquelle les seconds composants (SC) sont consolidés au premier composant (PC) ;
d) agencer lesdites structures en forme de peigne (SFP) obtenues précédemment sur un cadre (C) configuré pour être attaché audit moteur à réaction ; et
e) solidariser les structures en forme de peigne (SFP) audit cadre (C).

5. Procédé selon la revendication précédente, dans lequel deux seconds composants (SC), avantageusement à l'issue de l'étape c), de deux structures en peigne (SFP) différentes, sont solidarisés l'un à l'autre, par exemple par soudage et/ou par collage et/ou par complémentarité de forme.

6. Procédé selon l'une des revendications 4 ou 5, dans lequel le cadre (C) comprend des encoches (ENC, ENC') ou, selon le cas des ergots (E1 à E7), pour recevoir chaque structure en forme de peigne (SFP).

7. Procédé selon l'une des revendications 4 à 6, dans lequel le cadre (C) comprend quatre côtés (C1, C2, C3, C4) qui sont fixés deux à deux par des moyens d'attache amovibles.

8. Procédé selon l'une des revendications 4 à 7, dans lequel le cadre (C) comporte des fibres continues ou des fibres longues pré-imprégnées par une résine thermoplastique ou thermodurcissable.

9. Procédé selon l'une des revendication précédentes, dans lequel l'étape a) comporte les sous-étapes suivantes :
a₁) fournir (101) au moins un feuillet réalisé avec des fibres continues pré-imprégnées par une résine thermoplastique ou thermodurcissable ;
a₂) placer (102) ledit au moins un feuillet dans un moule ;
a₃) réaliser (103) un moulage par compression dudit au moins un feuillet dans le moule pour obtenir le premier composant (PC).

10. Procédé selon la revendication précédente, dans lequel l'étape b) comporte les sous-étapes suivantes :
b₁) fournir (201) au moins un deuxième feuillet réalisé avec des fibres continues pré-imprégnées par une résine thermoplastique ou thermodurcissable;
b₂) découper (202) le deuxième feuillet de sorte à créer des copeaux formés de fibres discontinues pré-imprégnées par une résine thermoplastique ou thermodurcissable ;
b₃) placer (203) lesdits copeaux dans un moule; et
b₄) réaliser (204) un moulage par compression desdits copeaux dans le moule pour obtenir les seconds composants (SC).

11. Procédé selon les revendications 9 et 10, dans lequel les sous-étapes a₂) (102) et b₃) (203) s'effectuent dans le même moule et les sous-étapes a₃) (103) et b₄) (204) s'effectuent concomitamment si bien que les étapes a) et b) s'effectuent concomitamment.

12. Procédé selon les revendications 9 et 10, dans lequel la sous-étape b₃) (203) s'effectue dans un moule en présence du premier composant (PC) obtenu à l'issue de la sous-étape a₃) (103) si bien que les étapes a) et b) s'effectuent subséquemment.

13. Procédé selon l'une des revendications 1 à 8, dans lequel l'étape a) comporte les sous-étapes suivantes :
a'₁) fournir (101') un feuillet réalisé avec des fibres continues pré-imprégnées par une résine thermoplastique ou thermodurcissable ;
a'₂) découper (102') le feuillet de sorte à créer des copeaux formés de fibres longues pré-imprégnées par une résine thermoplastique ou thermodurcissable ;
a'₃) placer (103') lesdits copeaux dans un moule; et
a'₄) réaliser (104') un moulage par compression desdits copeaux dans le moule pour obtenir le premier composant (PC).

14. Procédé selon la revendication précédente, dans lequel l'étape b) comporte les sous-étapes suivantes :
b'₁) fournir (201') au moins un deuxième feuillet réalisé avec des fibres continues pré-imprégnées par une résine thermoplastique ou thermodurcissable;
b'₂) découper (202') le deuxième feuillet de sorte à créer des copeaux formés de fibres longues pré-imprégnées par une résine thermoplastique ou thermodurcissable ;
b'₃) placer (203') lesdits copeaux dans un moule; et
b'₄) réaliser (204') un moulage par compression desdits copeaux dans le moule pour obtenir les seconds composants (SC).

15. Procédé selon les revendications 13 et 14, dans lequel les sous-étapes a'₃) (103') et b'₃) (203') s'effectuent dans le même moule et les sous-étapes a'₄) (104') et b'₄) (204') s'effectuent concomitamment si bien que les étapes a) et b) s'effectuent concomitamment.

16. Procédé selon l'une des revendications 1 à 8, dans lequel l'étape a) (100') s'effectue par pultrusion et dans lequel l'étape b) (200') s'effectue subséquemment par surmoulage par injection d'un premier composant (PC).

17. Procédé selon la revendication précédente, dans lequel l'étape b) (200') de surmoulage par injection s'effectue avec des fibres courtes, à savoir des fibres discontinues présentant une longueur non nulle et inférieure à 100 microns, pré-imprégnées par une résine thermoplastique ou thermodurcissable.

## Patentansprüche

1. Verfahren zur Herstellung eines Gitters für ein Schubumkehrsystem vom Kaskadentyp eines Strahltriebwerks, wobei das Verfahren die folgenden Schritte umfasst:
a) Herstellen (101, 102, 103; 101', 102', 103', 104'; 100') einer ersten Komponente (PC), die Endlos- oder lange Fasern umfasst, welche mit einem thermoplastischen oder wärmehärtbaren Harz vorimprägniert sind, wobei die langen Fasern eine Länge im Bereich zwischen 1 mm und 70 mm aufweisen;
b) Herstellen (201, 202, 203, 204; 201', 202', 203', 204'; 200'), nach oder gleichzeitig mit Schritt a), einer Reihe von zweiten Komponenten (SC), die jeweils Stapelfasern umfassen, welche mit einem thermoplastischen oder wärmehärtbaren Harz vorimprägniert sind, wobei Schritt b) so ausgeführt wird, dass die zweiten Komponenten (SC) einerseits auf mindestens einer Seite der ersten Komponente in Bezug auf eine Längsrichtung der ersten Komponente (PC) quer angeordnet sind, und andererseits in dieser Längsrichtung voneinander beabstandet sind, sodass eine kammförmige Struktur (SFP) gebildet wird, in der die zweiten Komponenten (SC) mit der ersten Komponente (PC) verfestigt sind.

2. Verfahren nach Anspruch 1, wobei eine in Schritt a) hergestellte erste Komponente eine Reihe von Kerben (ENC) umfasst, wobei jede Kerbe eine zweite Komponente aufnimmt.

3. Verfahren nach einem der vorstehenden Ansprüche, wobei Schritt b) weiter darin besteht, zweite Komponenten (SC) fest mit der zugehörigen ersten Komponente (PC) auf einer zweiten Seite der ersten Komponente zu verbinden, wobei die zweite Seite der ersten Seite gegenüberliegt.

4. Verfahren nach einem der vorstehenden Ansprüche, das weiter die folgenden Schritte umfasst:
c) mindestens einmaliges Wiederholen der Schritte a) und b), um mindestens eine weitere kammförmige Struktur (SFP) zu erhalten, in der die zweiten Komponenten (SC) mit der ersten Komponente (PC) verfestigt sind;
d) Anordnen der zuvor erhaltenen kammförmigen Strukturen (SFP) auf einem Rahmen (C), der konfiguriert ist, um an dem Strahltriebwerk angebracht zu werden; und
e) festes Verbinden der kammförmigen Strukturen (SFP) mit dem Rahmen (C).

5. Verfahren nach dem vorstehenden Anspruch, wobei zwei zweite Komponenten (SC), vorteilhafterweise am Ende von Schritt c), von zwei verschiedenen Kammstrukturen (SFP) zum Beispiel durch Schweißen und/oder durch Kleben und/oder durch Formschluss fest miteinander verbunden werden.

6. Verfahren nach einem der Ansprüche 4 oder 5, wobei der Rahmen (C) Kerben (ENC, ENC') oder gegebenenfalls Nasen (E1 bis E7) umfasst, um jede kammförmige Struktur (SFP) aufzunehmen.

7. Verfahren nach einem der Ansprüche 4 bis 6, wobei der Rahmen (C) vier Seiten (C1, C2, C3, C4) umfasst, die durch lösbare Befestigungsmittel paarweise befestigt sind.

8. Verfahren nach einem der Ansprüche 4 bis 7, wobei der Rahmen (C) Endlosfasern oder lange Fasern umfasst, welche mit einem thermoplastischen oder wärmehärtbaren Harz vorimprägniert sind.

9. Verfahren nach einem der vorstehenden Ansprüche, wobei Schritt a) die folgenden Teilschritte umfasst:
a₁) Bereitstellen (101) mindestens einer Bahn, die mit Endlosfasern hergestellt ist, welche mit einem thermoplastischen oder wärmehärtbaren Harz vorimprägniert sind;
a₂) Platzieren (102) der mindestens einen Bahn in einer Form;
a₃) Ausführen (103) eines Pressformens der mindestens einen Bahn in der Form, um die erste Komponente (PC) zu erhalten.

10. Verfahren nach dem vorstehenden Anspruch, wobei Schritt b) die folgenden Teilschritte umfasst:
b₁) Bereitstellen (201) mindestens einer zweiten Bahn, die mit Endlosfasern hergestellt ist, welche mit einem thermoplastischen oder wärmehärtbaren Harz vorimprägniert sind;
b₂) Schneiden (202) der zweiten Bahn, um Schnipsel zu erzeugen, die aus Stapelfasern gebildet sind, welche mit einem thermoplastischen oder wärmehärtbaren Harz vorimprägniert sind;
b₃) Platzieren (203) der Schnipsel in einer Form; und
b₄) Ausführen (204) eines Pressformens der Schnipsel in der Form, um die zweiten Komponenten (SC) zu erhalten.

11. Verfahren nach den Ansprüchen 9 und 10, wobei die Teilschritte a₂) (102) und b₃) (203) in derselben Form erfolgen, und die Teilschritte a₃) (103) und b₄) (204) gleichzeitig erfolgen, sodass die Schritte a) und b) gleichzeitig erfolgen.

12. Verfahren nach den Ansprüchen 9 und 10, wobei Teilschritt b₃) (203) in einer Form in Gegenwart der am Ende von Teilschritt a₃) (103) erhaltenen ersten Komponente (PC) erfolgt, sodass die Schritte a) und b) nacheinander erfolgen.

13. Verfahren nach einem der Ansprüche 1 bis 8, wobei Schritt a) die folgenden Teilschritte umfasst:
a'₁) Bereitstellen (101') einer Bahn, die mit Endlosfasern hergestellt ist, welche mit einem thermoplastischen oder wärmehärtbaren Harz vorimprägniert sind;
a'₂) Schneiden (102') der Bahn, um Schnipsel zu erzeugen, die aus langen Fasern gebildet sind, welche mit einem thermoplastischen oder wärmehärtbaren Harz vorimprägniert sind;
a'₃) Platzieren (103') der Schnipsel in einer Form; und
a'₄) Ausführen (104') eines Pressformens der Schnipsel in der Form, um die erste Komponente (PC) zu erhalten.

14. Verfahren nach dem vorstehenden Anspruch, wobei Schritt b) die folgenden Teilschritte umfasst:
b'₁) Bereitstellen (201') mindestens einer zweiten Bahn, die mit Endlosfasern hergestellt ist, welche mit einem thermoplastischen oder wärmehärtbaren Harz vorimprägniert sind;
b'₂) Schneiden (202') der zweiten Bahn, um Schnipsel zu erzeugen, die aus langen Fasern gebildet sind, welche mit einem thermoplastischen oder wärmehärtbaren Harz vorimprägniert sind;
b'₃) Platzieren (203') der Schnipsel in einer Form; und
b'₄) Ausführen (204') eines Pressformens der Schnipsel in der Form, um die zweiten Komponenten (SC) zu erhalten.

15. Verfahren nach den Ansprüchen 13 und 14, wobei die Teilschritte a'₃) (103') und b'₃) (203') in derselben Form erfolgen, und die Teilschritte a'₄) (104') und b'₄) (204') gleichzeitig erfolgen, sodass die Schritte a) und b) gleichzeitig erfolgen.

16. Verfahren nach einem der Ansprüche 1 bis 8, wobei Schritt a) (100') durch Pultrusion erfolgt, und wobei Schritt b) (200') danach durch Umspritzen einer ersten Komponente (PC) erfolgt.

17. Verfahren nach dem vorstehenden Anspruch, wobei Schritt b) (200') des Umspritzens mit kurzen Fasern, das heißt Stapelfasern, die eine Länge von ungleich Null und kleiner als 100 Mikrometer aufweisen, welche mit einem thermoplastischen oder wärmehärtbaren Harz vorimprägniert sind, erfolgt.

## Claims

1. Method for manufacturing a grille for a cascade type thrust reverser, of a jet engine, said method including the following steps:
a) manufacturing (101, 102, 103; 101', 102', 103', 104'; 100') a first component (PC) including continuous or long fibres, pre-impregnated by a thermoplastic or thermosetting resin;
b) manufacturing (201, 202, 203, 204; 201', 202', 203', 204'; 200'), subsequently or together with step a), a series of second components (SC) each including discontinuous fibres, pre-impregnated by a thermoplastic or thermosetting resin, step b) being carried out such that the second components (SC) are, on the one hand, arranged transversally with respect to a longitudinal direction of the first component on at least one side of the first component (PC) and, on the other hand, spaced from one another according to this longitudinal direction, so as to form a comb-shaped structure (SFP), wherein the second components (SC) are consolidated to the first component (PC).

2. Method according to claim 1, wherein a first component manufactured during step a) comprises a series of notches (ENC), each notch receiving a second component.

3. Method according to one of the preceding claims, wherein step b) furthermore consists of securing second components (SC) to the associated first component (PC) on a second side of the first component, the second side being opposite the first side.

4. Method according to one of the preceding claims, further including the following steps:
c) repeating steps a) and b) at least once, in order to obtain at least one other comb-shaped structure (SFP), wherein the second components (SC) are consolidated to the first component (PC);
d) arranging said comb-shaped structures (SFP) obtained beforehand on a frame (C) configured to be attached to said jet engine; and
e) securing the comb-shaped structures (SFP) to said frame (C).

5. Method according to the preceding claim, wherein two second components (SC), advantageously from step c), of two different comb-shaped structures (SFP), are secured to one another, for example by welding and/or by bonding and/or by complementing shapes.

6. Method according to one of claims 4 or 5, wherein the frame (C) comprises notches (ENC, ENC') or, according to the case of lugs (E1 à E7), to receive each comb-shaped structure (SFP).

7. Method according to one of claims 4 to 6, wherein the frame (C) comprises four sides (C1, C2, C3, C4) which are fixed two-by-two by removable fastening means.

8. Method according to one of claims 4 to 7, wherein the frame (C) comprises continuous fibres or long fibres, pre-impregnated by a thermoplastic or thermosetting resin.

9. Method according to one of the preceding claims, wherein step a) comprises the following sub-steps:
a₁) providing (101) at least one sheet made with continuous fibres, pre-impregnated by a thermoplastic or thermosetting resin;
a₂) placing (102) said at least one sheet in a mould;
a₃) compression moulding (103) said at least one sheet in the mould to obtain the first component (PC).

10. Method according to the preceding claim, wherein step b) comprises the following sub-steps:
b₁) providing (201) at least one second sheet made with continuous fibres, pre-impregnated by a thermoplastic or thermosetting resin;
b₂) cutting (202) the second sheet so as to create shavings formed of discontinuous fibres, pre-impregnated by a thermoplastic or thermosetting resin;
b₃) placing (203) said shavings in a mould; and
b₄) compression moulding (204) said shavings in the mould to obtain the second components (SC).

11. Method according to claims 9 and 10, wherein sub-steps a₂) (102) and b₃) (203) are carried out in the same mould and sub-steps a₃) (103) and b₄) (204) are carried out together, so that steps a) and b) are carried out together.

12. Method according to claims 9 and 10, wherein sub-step b₃) (203) is carried out in a mould, in the presence of the first component (PC) obtained from sub-step a₃) (103), so that steps a) and b) are subsequently carried out.

13. Method according to one of claims 1 to 8, wherein step a) comprises the following sub-steps:
a'₁) providing (101') a sheet made with continuous fibres, pre-impregnated by a thermoplastic or thermosetting resin;
a'₂) cutting (102') the sheet so as to create shavings formed of long fibres, pre-impregnated by a thermoplastic or thermosetting resin;
a'₃) placing (103') said shavings in a mould; and
a'₄) compression moulding (104') said shavings in the mould to obtain the first component (PC).

14. Method according to the preceding claim, wherein step b) comprises the following sub-steps:
b'₁) providing (201') at least one second sheet made with continuous fibres, pre-impregnated by a thermoplastic or thermosetting resin;
b'₂) cutting (202') the second sheet so as to create shavings formed of long fibres, pre-impregnated by a thermoplastic or thermosetting resin;
b'₃) placing (203') said shavings in a mould; and
b'₄) compression moulding (204') said shavings in the mould to obtain the second components (SC).

15. Method according to claims 13 and 14, wherein sub-steps a'₃) (103') and b'₃) (203') are carried out in the same mould and sub-steps a'₄) (104') and b'₄) (204') are carried out together, so that steps a) and b) are carried out together.

16. Method according to one of claims 1 to 8, wherein step a) (100') is carried out by pultrusion and wherein step b) (200') is subsequently carried out by injection overmoulding of a first component (PC).

17. Method according to the preceding claim, wherein injection overmoulding step b) (200') is carried out with short fibres, namely discontinuous fibres presenting a length, non-zero and less than 100 microns, pre-impregnated by a thermoplastic or thermosetting resin.
